(19) Europäisches Patentamt
European Patent Office
Office européen des brevets

(11) Veröffentlichungsnummer: **0 157 120**
**A1**

(12) # EUROPÄISCHE PATENTANMELDUNG

(21) Anmeldenummer: **85101244.3**

(22) Anmeldetag: **06.02.85**

(51) Int. Cl.⁴: **C 08 G 18/65**, C 08 G 18/32

(30) Priorität: **17.02.84 DE 3405680**

(43) Veröffentlichungstag der Anmeldung: **09.10.85 Patentblatt 85/41**

(84) Benannte Vertragsstaaten: **BE DE FR GB IT NL SE**

(71) Anmelder: **BASF Aktiengesellschaft, Carl-Bosch-Strasse 38, D-6700 Ludwigshafen (DE)**

(72) Erfinder: **Schmidt, Hans Ulrich, Wredestrasse 53, D-6700 Ludwigshafen (DE)**
Erfinder: **Werner, Frank, Dr., Erschigweg 9, D-6730 Neustadt (DE)**

(54) **Verfahren zur Herstellung von gegebenfalls zelligen Polyurethan-Polyharnstoff-Formkörpern mit verbessertem Entformungsverhalten.**

(57) Die Erfindung betrifft ein Verfahren zur Herstellung von zellhaltigen oder kompakten Polyurethan-Polyharnstoff-Formkörpern durch Umsetzung von

a) organischen Polyisocyanaten

b) höhermolekularen Verbindungen mit mindestens zwei reaktiven Wasserstoffatomen,

c) Mischungen aus aromatischen Diaminen, die bestehen aus

ci) 80 bis 50 Gew.% mindestens eines primären aromatischen Diamins, dessen Aminogruppen gegenüber Polyisocyanaten durch mindestens einen orthoständigen Alkylsubstituenten zu jeder Aminogruppe sterisch behindert sind und

cii) 20 bis 50 Gew.% mindestens eines unsubstituierten oder substituierten primären aromatischen Diamins, dessen Aminogruppen gegenüber Polyisocyanaten keine durch elektronenanziehende Substituenten und/oder sterische Hinderung verursachte verminderte Reaktivität zeigen, wobei die Gew.% bezogen sind auf das Gesamtgewicht der Mischung (ci) und (cii) und gegebenenfalls

d) weiteren Kettenverlängerungsmitteln und/oder Vernetzern in Gegenwart von

e) Katalysatoren und gegebenenfalls

f) Treibmitteln,

g) Hilfsmitteln und/oder Zusatzstoffen

als one shot-systeme nach der Reaktionsspritzgußtechnik in Abwesenheit von äußeren Formtrennmitteln.

EP 0 157 120 A1

ACTORUM AG

Verfahren zur Herstellung von gegebenenfalls zelligen Polyurethan-Polyharnstoff-Formkörpern mit verbessertem Entformungsverhalten

Die Herstellung von vernetzten Kunststoffen nach dem Isocyanat-Polyadditionsverfahren ist bekannt. Nach Angaben der DE-AS 11 96 864 (US 3 099 516) werden hierzu Hydroxylgruppen aufweisende Verbindungen und Polyisocyanate in Gegenwart von Treibmitteln und Katalysatoren in Formen verschäumt.

Bei geeigneter Wahl der Hydroxylgruppen aufweisenden Polyester, Polyether, Polyesteramide u.a. und organischen Polyisocyanate sowie durch zusätzliche Mitverwendung von Kettenverlängerungsmitteln, wie Glykolen oder Diaminen, können nach dieser Methode sowohl elastische wie starre Polyurethane sowie alle dazwischen liegenden Modifikationen hergestellt werden.

Zur Herstellung der Polyurethanelastomeren werden nach DE-PS 831 604 (US 2 778 810) aus den hydroxylgruppenhaltigen Verbindungen und Polyisocyanaten zunächst NCO-gruppenhaltige Präpolymere hergestellt, die dann in einer zweiten Stufe mit dem Kettenverlängerungsmittel zum hochmolekularen Elastomeren umgesetzt werden.

Diamine als Kettenverlängerungsmittel konnten im allgemeinen nicht nach dem one-shot-Verfahren verarbeitet werden. Nach Angaben der DE-AS 11 49 523 (US 3 105 062) werden den flüssigen, NCO-gruppenhaltigen Präpolymeren kristalline, aromatische primäre Diamine in einer zur Absättigung der Isocyanatgruppen unzureichenden Menge bei einer unter dem Schmelzpunkt der Diamine liegenden Temperatur einverleibt und danach die Massen durch Wärmezufuhr ausgehärtet. Gemäß DE-PS 12 40 654 (US 3 428 610) werden die NCO-gruppenhaltigen Präpolymeren bei Raumtemperatur oder mäßig erhöhten Temperaturen mit solchen flüssigen oder gelösten aromatischen Diaminen umgesetzt, die in o-Stellung zur ersten Aminogruppe mindestens einen linearen Alkylsubstituenten und zur zweiten Aminogruppe zwei lineare Alkylsubstituenten mit 1 bis 3 C-Atomen aufweisen.

Ein Verfahren zur Herstellung von gegebenenfalls zelligen, elastischen Formkörpern mit einer geschlossenen Oberflächenschicht aus Polyurethan-Polyharnstoff-Elastomeren nach dem Prinzip der Reaktionsspritzgußtechnik (RIM) wird in der DE-AS 26 22 951 (US 4 218 543) beschrieben. Die genannten Systeme bestehen im wesentlichen aus organischen Polyisocyanaten, Polyolen, reaktiven aromatischen Di- bzw. Polyaminen, die in o-Stellung zur Aminogruppe durch Alkylgruppen substituiert sind und starken Katalysatoren für die Reaktion zwischen Hydroxyl- und Isocyanatgruppen. Wesentlich hierbei ist, daß die aromatischen Di- bzw. Polyamine in jedem Verhältnis mit Polyolen des Molekulargewichts 12000 bis 1800 mischbar sind, die Alkylsubstituenten 1 bis 3 Kohlenstoffatome aufweisen, wobei mindestens zwei der Alkylsubstituenten 2 bis 3 Kohlenstoffatome besitzen und jede der o-Stellungen zu den Aminogruppen substituiert ist. Derartige Systeme besitzen Startzeiten bis herab zu weniger als einer Sekunde; der Übergang der flüssigen in die feste Phase erfolgt nahezu schlagartig, was dazu führt, daß das flüssige Reaktionsgemisch in der Form an deren Wandungen gleichsam erstarrt.

Es ist ferner bekannt, daß die Reaktivität von aromatisch gebundenen Aminogruppen gegenüber Isocyanaten durch elektronenanziehende Substituenten stark vermindert werden kann. Beispiele für derartige aromatische Diamine sind nach DE-PS 12 16 538 (GB-PS 981 935) 3,3'-Dichlor-4,4'-diamino-diphenylmethan, 3,3'-Dinitro-4,4'-diamino-diphenylmethan und 3,3'-Dichlor-4,4'-diamino-diphenyl, deren Verarbeitung aus gesundheitsschädlichen Bedenken aufwendige und erschwerende Auflagen erfordert. Durch die stark elektronegativen Substituenten dieser Verbindungen wird jedoch die Reaktivität der aromatisch gebundenen Aminogruppen so stark herabgesetzt, daß die Durchhärtung bei nach der Reaktionsspritzgußtechnik hergestellten Formkörpern bis zu 15 Minuten erfordert und damit unwirtschaftlich wird.

Polyurethan-Polyharnstoff-Formulierungen mit im Vergleich zu Systemen gemäß DE-AS 26 22 951 etwas verminderter Reaktivität und dadurch verbesserter Fließfähigkeit werden nach Angaben der EP-OS 26 915 erhalten, wenn man als aromatische Diamine 3,3',5,5'-tetraalkylsubstituierte 4,4'-Diaminodiphenylmethane verwendet, in denen die Alkylreste gleich oder verschieden sind und einen Methyl-, Ethyl-, Isopropyl-, sek.- oder tert.-Butylrest bedeuten, wobei mindestens einer der Substituenten ein Isopropyl- oder sek.-Butylrest sein muß. Die beschriebenen tetraalkylsubstituierten Diaminodiphenylmethane sind mit den Polyolen in den erforderlichen Mengen bei Raumtemperatur sehr gut mischbar und zeigen nur eine geringe oder gar keine Kristallisationsneigung, so daß die Formulierungen unter den für konventionelle RIM-Systeme üblichen Bedingungen gut handhabbar sind. Es zeigte sich jedoch auch, daß die beschriebenen tetraalkylsubstituierten 4,4'-Diamino-diphenylmethane für spezielle Anwendungen zu wenig reaktiv sein können.

Im Vergleich zu EP-OS 26 915 etwas reaktivere Polyurethan-Polyharnstoff-Formulierungen werden in der EP-OS 69 286 beschrieben. Als aromatische

Diamine verwendet werden trialkylsubstituierte meta-Phenylendiamine, wobei zwei der Alkylsubstituenten gleich oder verschieden und lineare oder verzweigte Alkylreste mit 1 bis 4 C-Atomen sind und der 3. Alkylrest 4 bis 12 C-Atome aufweist oder ein fünf- oder sechsgliedriger Cycloalkylrest ist. Die Formulierungen weisen selbst bei einem relativ hohen Gehalt an Diaminen eine ausreichende Fließfähigkeit auf und ergeben Formkörper mit einer hohen Wärmeformbeständigkeit, die keinen progressiven Abfall der Schubmodulkurven zwischen 100 und 200°C zeigen.

Bekannt ist ferner die ausschließlich oder teilweise Verwendung von Polyoxyalkylen-polyaminen mit Molekulargewichten von 1100 bis 16000 zur Herstellung von elastischen Polyharnstoff- bzw. Polyurethan-Polyharnstoff--Elastomeren aus der EP-OS 81 701, DE-OS 32 15 909 und DE-OS 32 15 907.

Die genannten Verfahren weisen den Nachteil auf, daß bei der Herstellung der Formteile in einer Serienproduktion als Entformungshilfsmittel äußere und/oder innere Trennmittel eingesetzt werden müssen, da andernfalls die Formkörper an das Formwerkzeug kleben und bei der Entformung beschädigt werden können. Die Verwendung von inneren Trennmitteln bringt nur eine geringfügige Verbesserung der selbsttrennenden Eigenschaften. Auch bei der partiellen Mitverwendung von Polyoxyalkylen-polyaminen gemäß EP-OS 81 701 werden noch innere Trennmittel benötigt, um auf äußere Trennmittel verzichten zu können. Wird auf den Zusatz von Trennmitteln vollständig verzichtet, so muß nach 5 bis 10 Entformungen mit einer Beschädigung des Formkörpers gerechnet werden. Durch den Zusatz von Trennmitteln wird insbesondere die Lackierfähigkeit der Formteile erheblich erschwert oder unmöglich gemacht.

Die Aufgabe der vorliegenden Erfindung bestand darin, elastische, gegebenenfalls zellige Polyurethan-Polyharnstoff-Formkörper nach der Reaktionsspritztechnik nach einer Methode herzustellen, die die Anwendung von bekannten äußeren Trennmitteln erübrigt.

Diese Aufgabe konnte überraschenderweise durch die Verwendung von speziellen Mischungen aus sterisch gehinderten und hochreaktiven primären aromatischen Diaminen in bestimmten Mengenverhältnissen als eine Aufbaukomponente gelöst werden.

Gegenstand der Erfindung ist somit ein Verfahren zur Herstellung von zellhaltigen oder kompakten Polyurethan-Polyharnstoff-Formkörpern durch Umsetzung von

06 02 85

a) organischen Polyisocyanaten,
b) höhermolekularen Verbindungen mit mindestens zwei reaktiven Wasserstoffatomen,
c) aromatischen Diaminen und gegebenenfalls
d) weiteren Kettenverlängerungsmitteln und/oder Vernetzern in Gegenwart von
e) Katalysatoren und gegebenenfalls
f) Treibmitteln,
g) Hilfsmitteln und/oder Zusatzstoffen

als one-shot-Systeme nach der Reaktionsspritzgußtechnik in geschlossenen Formwerkzeugen, das dadurch gekennzeichnet ist, daß man als aromatische Diamine (c) Mischungen verwendet aus

ci) 80 bis 50 Gew.%, vorzugsweise 78 bis 65 Gew.% mindestens eines primären aromatischen Diamins, dessen Aminogruppen gegenüber Polyisocyanaten durch mindestens einen orthoständigen Alkylsubstituenten zu jeder Aminogruppe sterisch behindert sind und

cii) 20 bis 50 Gew.%, vorzugsweise 22 bis 35 Gew.% mindestens eines unsubstituierten oder substituierten primären aromatischen Diamins, dessen Aminogruppen gegenüber Polyisocyanaten keine durch elektronenanziehende Substituenten und/oder sterische Hinderung verursachte verminderte Reaktivität zeigen, wobei die Gew.% bezogen sind auf das Gesamtgewicht der Mischung (ci) und (cii).

Das erfindungsgemäße Verfahren weist den Vorteil auf, daß vollständig auf die Verwendung von äußeren Trennmitteln, z.B. solchen aus der Gruppe der Silicone und Wachse zur Behandlung des Formwerkzeugs verzichtet werden kann und die Lackierfähigkeit der Formkörper dadurch nicht beeinträchtigt wird. Ferner können die Formkörper in kürzeren Taktzeiten hergestellt werden.

Zu den für das erfindungsgemäße Verfahren verwendbaren Aufbaukomponenten (a) bis (c) und (e) sowie gegebenenfalls (d), (f) und (g) ist folgendes auszuführen:

Als organische Polyisocyanate (a) kommen aliphatische, cycloaliphatische, araliphatische und vorzugsweise aromatische mehrwertige Isocyanate in Frage. Im einzelnen seien beispielhaft genannt: Alkylendiisocyanate mit 4 bis 12 Kohlenstoffatomen im Alkylenrest, wie 1,12-Dodecan-diisocyanat, Tetramethylen-diisocyanat-1,4 und vorzugsweise Hexamethylen-diisocyanat-1,6; cycloaliphatische Diisocyanate, wie Cyclohexan-1,3- und 1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylen-diisocyanat sowie die entsprechenden Isomerengemische, 4,4'-, 2,2'- und 2,4'-Dicyclohexylmethan-diisocyanat sowie die entsprechenden Isomerengemische und vorzugsweise aromatische Di- und Polyisocyanate, wie 4,4'-, 2,4'- und 2,2'-Diisocyanato-diphenylmethan und die entsprechenden Isomerengemische, 2,4- und 2,6-Diisocyanato-toluol und die entsprechenden Isomerengemische, 1,5-Diisocyanato-naphthalin, Polyphenyl-polymethylen-polyisocyanate, 2,4,6-Triisocyanato-toluol und vorzugsweise Gemische aus Diphenylmethan-diisocyanaten und Polyphenyl-polymethylen-polyisocyanaten (Roh-MDI). Die genannten Di- und Polyisocyanate können einzeln oder in Form von Mischungen eingesetzt werden.

Häufig werden auch sogenannte modifizierte mehrwertige Isocyanate, d.h. Produkte, die durch chemische Umsetzung obiger Di- und/oder Polyisocyanate erhalten werden, verwendet. Als modifizierte organische Di- und Polyisocyanate kommen beispielsweise in Betracht: Carbodiimidgruppen aufweisende Polyisocyanate gemäß DE-PS 10 92 007, Allophanatgruppen aufweisende Polyisocyanate, wie sie z.B. in der britischen Patentschrift 994 890, den ausgelegten Unterlagen des belgischen Patents 761 626 und der NL-OS 71 02 524 beschrieben werden, Isocyanuratgruppen aufweisende Polyisocyanate, wie sie z.B. in den DE-PS 10 22 789, 12 22 067 und 10 27 394 sowie den DE-OS 19 29 034 und 20 04 048 beschrieben werden, Urethangruppen aufweisende Polyisocyanate, wie sie z.B. in den ausgelegten Unterlagen des belgischen Patents 752 261 oder der US-PS 3 394 164 beschrieben werden, acylierte Harnstoffgruppen aufweisende Polyisocyanate z.B. gemäß DE-PS 12 30 778, Biuretgruppen aufweisende Polyisocyanate z.B. gemäß DE-PS 11 01 394 und GB-PS 889 050; durch Telomerisationsreaktionen hergestellte Polyisocyanate z.B. entsprechend den ausgelegten Unterlagen des belgischen Patents 723 640, Estergruppen aufweisende Polyisocyanate, wie sie z.B. in der GB-PS 965 474 und 1 072 956, der US-PS 3 567 765 und der DE-PS 12 31 688 genannt werden.

Vorzugsweise kommen jedoch zur Anwendung: urethangruppenhaltige Polyisocyanate, beispielsweise mit niedermolekularen linearen oder verzweigten Alkandiolen, Dialkylenglykolen oder Polyoxyalkylenglykolen mit Molekulargewichten bis 800 auf Basis von Ethylenoxid, 1,2-Propylenoxid oder deren Gemischen modifiziertes 4,4'- und/oder 2,4'-Diphenylmethan-diisocyanat oder 2,4- und/oder 2,6-Toluylen-diisocyanat, Carbodiimidgruppen und/oder Isocyanuratringe enthaltende Polyisocyanate, z.B. auf 4,4'-, 2,4'-Diphenylmethan-diisocyanat, 2,4- und/oder 2,6-Toluylen-diisocyanat-Basis und insbesondere 4,4'-Diphenylmethan-diisocyanat, Mischungen aus 2,4'- und 4,4'-Diphenylmethan-diisocyanat, Toluylen-diisocyanate, Mischungen aus

Diphenylmethan-diisocyanaten und Polyphenyl-polymethylen-polyisocyanaten (Roh-MDI) und Gemische aus Toluylen-diisocyanaten und Roh-MDI.

Als höhermolekulare Verbindungen (b) mit mindestens zwei reaktiven Wasserstoffatomen werden zweckmäßigerweise solche mit einer Funktionalität von 2 bis 8, vorzugsweise 2 bis 4 und einem Molekulargewicht von 1000 bis 8000, vorzugsweise von 1200 bis 6000 verwendet. Bewährt haben sich z.B. Polyether-polyamine und/oder vorzugsweise Polyole ausgewählt aus der Gruppe der Polyether-polyole, Polyester-polyole, Polythioether-polyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyester-polyole und/oder Polyether-polyole.

Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure und Fumarsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20-35 : 35-50 : 20-32 Gew.Teilen, und insbesondere Adipinsäure. Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. $\varepsilon$-Caprolacton, oder Hydroxycarbonsäuren, z.B. -Hydroxycapronsäure.

Die Polyester-polyole besitzen vorzugsweise eine Funktionalität von 2 bis 3 und ein Molekulargewicht von 1.000 bis 3.000 und vorzugsweise 1.800 bis 2.500.

Insbesondere als Polyole verwendet werden jedoch Polyether-polyole, die nach bekannten Verfahren, beispielsweise durch anionische Polymerisation mit Alkalihydroxiden, wie Natrium- oder Kaliumhydroxid, oder Alkalialkoholaten, wie Natriummethylat, Natrium- oder Kaliumethylat oder Kaliumisopropylat als Katalysatoren oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest und einem Startermolekül, das 2 bis 8, vorzugsweise 2 bis 4, reaktive Wasserstoffatome gebunden enthält, hergestellt werden.

Geeignete Alkylenoxide sind beispielsweise Tetrahydrofuran, 1,3-Propylenoxid, 1,2- bzw. 2,3-Butylenoxid, Styroloxid, Epichlorhydrin und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,4- und 2,6-Toluylendiamin und 4,4'-, 2,4'- und 2,2'-Diamino-diphenylmethan.

Als Startermoleküle kommen ferner in Betracht Alkanolamine, wie Ethanolamin, Diethanolamin, N-Methyl- und N-Ethyl-ethanolamin, N-Methyl- und N-Ethyl-diethanolamin und Triethanolamin, Ammoniak, Hydrazin und Hydrazide. Vorzugsweise verwendet werden mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Trimethylol-propan, Pentaerythrit, Sorbit und Saccharose.

Die Polyether-polyole besitzen vorzugsweise eine Funktionalität von 2 bis 4 und Molekulargewichte von 1.000 bis 8.000, vorzugsweise 1.200 bis 6.000 und insbesondere 1.800 bis 4.000. Sie können ebenso wie die Polyester-polyole einzeln oder in Form von Mischungen verwendet werden. Ferner können sie mit den Polyester-polyolen sowie den hydroxylgruppenhaltigen Polyesteramiden, Polyacetalen, Polycarbonaten und/oder Polyether-polyaminen gemischt werden.

Als hydroxylgruppenhaltige Polyacetale kommen z.B. die aus Glykolen, wie Diethylenglykol, Triethylenglykol, 4,4'-Dihydroxyethoxy-diphenyldimethyl-

methan, Hexandiol und Formaldehyd herstellbaren Verbindungen in Frage. Auch durch Polymerisation cyclischer Acetale lassen sich geeignete Polyacetale herstellen.

Als Hydroxylgruppen aufweisende Polycarbonate kommen solche der an sich bekannten Art in Betracht, die beispielsweise durch Umsetzung von Diolen, wie Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.

Zu den Polyesteramiden zählen z.B. die aus mehrwertigen gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Hydroxyl- und/oder Aminogruppen aufweisenden Kondensate.

Geeignete Polyether-polyamine können aus den obengenannten Polyether-polyolen nach bekannten Verfahren hergestellt werden. Beispielhaft genannt seien die Cyanoalkylierung von Polyoxyalkylen-polyolen und anschließende Hydrierung des gebildeten Nitrils (US 3 267 050) oder die Aminierung von Polyoxyalkylen-polyolen mit Aminen oder Ammoniak in Gegenwart von Wasserstoff und Katalysatoren (DE 12 15 373).

Als aromatische Diamine (c) werden beim erfindungsgemäßen Verfahren Mischungen verwendet aus

ci) 80 bis 50 Gew.%, vorzugsweise 78 bis 65 Gew.% mindestens eines primären aromatischen Diamins, dessen Aminogruppen gegenüber Polyisocyanaten durch mindestens einen orthoständigen Alkylsubstituenten zu jeder Aminogruppe sterisch behindert sind und

cii) 20 bis 50 Gew.%, vorzugsweise 22 bis 35 Gew.% mindestens eines unsubstituierten oder substituierten primären aromatischen Diamins, dessen Aminogruppen gegenüber Polyisocyanaten keine durch elektronenanziehende Substituenten und/oder sterische Hinderung verursachte verminderte Reaktivität zeigen, wobei die Gew.% bezogen sind auf das Gesamtgewicht der Mischung aus (ci) und cii).

Insbesondere geeignet sind primäre aromatische Diamine (c), die bei Raumtemperatur flüssig und mit der Komponente (b) unter den Verarbeitungsbedingungen ganz oder zumindest teilweise mischbar sind.

Als primäre aromatische Diamine (ci) bewährt haben sich und daher vorzugsweise verwendet werden alkylsubstituierte meta-Phenylendiamine der Formeln

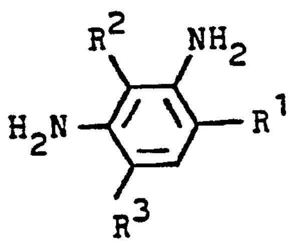

und/oder

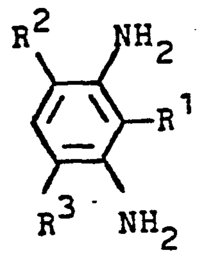

in denen $R^1$ ein Wasserstoffatom oder ein linearer oder verzweigter Alkylrest mit 1 bis 12 Kohlenstoffatomen, vorzugsweise 1 bis 6 Kohlenstoffatomen ist und $R^2$ und $R^3$ gleiche oder verschiedene, lineare oder verzweigte Alkylreste mit 1 bis 4 Kohlenstoffatomen, wie z.B. ein Methyl-, Ethyl-, Propyl-, Isopropyl-, Butyl- oder sek. Butylrest sind.

Geeignet sind insbesondere solche Alkylreste $R^1$, bei denen die Verzweigungsstelle am $C_1$-Kohlenstoffatom sitzt. Neben Wasserstoff seien als Alkylreste $R^1$ beispielhaft genannt: der Methyl-, Ethyl-, n- und iso-Propyl-, Butyl-, Hexyl-, Octyl-, Decyl-, 1-Methyl-octyl-, 2-Ethyl-octyl-, 1-Methyl-hexyl-, 1,1-Dimethyl-pentyl-, 1,3,3-Trimethyl-hexyl-, 1-Ethyl-pentyl-, 2-Ethyl-pentyl- und vorzugsweise der Cyclohexyl-, 1-Methyl-n-propyl-, tert.-Butyl-, 1-Ethyl-n-propyl-, 1-Methyl-n-butyl- und 1,1-Dimethyl-n-propylrest.

Als alkylsubstituierte m-Phenylendiamine kommen beispielsweise in Betracht: 2,4-Dimethyl-, 2,4-Diethyl-, 2,4-Diisopropyl-, 2,4-Diethyl-6-methyl-, 2-Methyl-4,6-diethyl-, 2,4,6-Triethyl-, 2,4-Dimethyl-6-cyclohexyl-, 2-Cyclohexyl-4,6-diethyl-, 2-Cyclohexyl-2,6-diisopropyl-, 2,4-Dimethyl-6-(1-ethyl-n-propyl)-, 2,4-Dimethyl-6-(1,1-dimethyl-n-propyl)- und 2-(1-Methyl-n-butyl)-4,6-dimethyl-phenylendiamin-1,3.

Bewährt haben sich ferner alkylsubstituierte Diamino-diphenylmethane, wie z.B. 3,3'-di- und 3,3',5,5'-tetra-n-alkylsubstituierte 4,4'-Diamino-diphenylmethane wie z.B. 3,3'-Diethyl-, 3,3',5,5'-Tetraethyl- und 3,3',5,5'-Tetra-n-propyl-4,4'-diamino-diphenyl methan.

Anwendung finden vorteilhafterweise Diamino-diphenylmethane der Formel

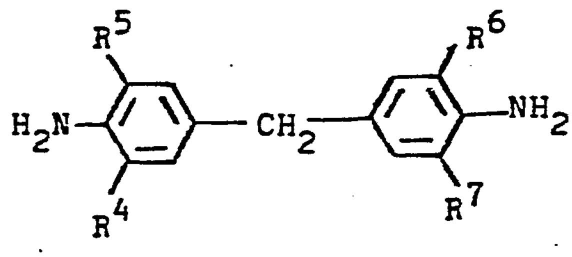

in der $R^4$, $R^5$, $R^6$ und $R^7$ gleich oder verschieden sind und einen Methyl-, Ethyl-, Propyl-, Isopropyl-, sek.-Butyl- und tert.-Butylrest bedeuten, wobei jedoch mindestens einer der Reste ein Isopropyl- oder sek.-Butylrest sein muß. Die alkylsubstituierten 4,4'-Diamino-diphenylmethane können auch im Gemisch mit Isomeren der Formeln

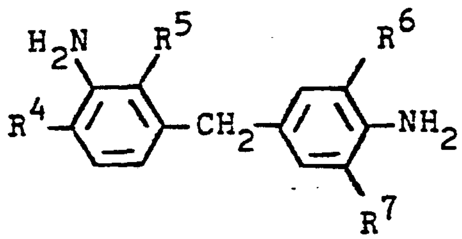

und/oder

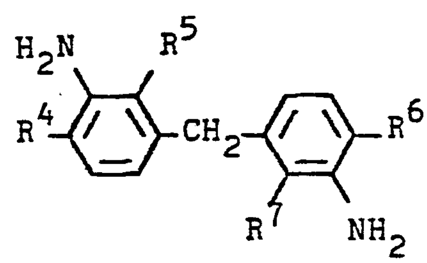

verwendet werden, wobei $R^4$, $R^5$, $R^6$ und $R^7$ die obengenannte Bedeutung haben.

Beispielhaft genannt seien: 3,3',5-Trimethyl-5'-isopropyl-, 3,3',5-Triethyl-5'-isopropyl-, 3,3',5-Trimethyl-5'-sek.-butyl-, 3,3',5-Triethyl-5'--sek.-butyl-4,4'-diamino-diphenylmethan, 3,3'-Dimethyl-5,5'-diisopropyl-, 3,3'-Diethyl-5,5'-diisopropyl-, 3,3'-Dimethyl-5,5'-di-sek.-butyl-, 3,3'--Diethyl-5,5'-di-sek.-butyl-, 3,5-Dimethyl-3',5'-diisopropyl-, 3,5-Diethyl-3',5'-diisopropyl-, 3,5-Dimethyl-3',5'-di-sek.-butyl-, 3,5-Diethyl--3',5'-di-sek.-butyl-4,4'-diamino-diphenylmethan, 3-Methyl-3',5,5'-triisopropyl-, 3-Ethyl-3',5,5'-triisopropyl-, 3-Methyl-3',5,5'-tri-sek.-butyl-, 3-Ethyl-3',5,5'-tri-sek.-butyl-4,4'-diamino-diphenylmethan, 3,3'-Diisopropyl-5,5'-di-sek.-butyl-, 3,5-Diisopropyl-3',5'-di-sek.-butyl-, 3-Ethyl--5-sek.-butyl-3',5'-diisopropyl-, 3-Methyl-5-tert.-butyl-3',5'-diisopropyl-, 3-Ethyl-5-sek.-butyl-3'-methyl-5'-tert.-butyl-, 3,3',5,5'-Tetraisopropyl- und 3,3',5,5'-Tetra-sek.-butyl-4,4'-diaminodiphenylmethan.

Vorzugsweise verwendet werden folgende primären aromatischen Diamine: 2,4-Diethyl-, 2,4-Dimethyl-phenylendiamin-1,3, 2,4-Diethyl-6-methyl-, 2-Methyl-4,6-diethyl-phenylendiamin-1,3, 2,4,6-Triethyl-phenylendiamin--1,3, 2,4-Dimethyl-6-tert.-butyl-, 2,4-Dimethyl-6-isooctyl- und 2,4-Dimethyl-6-cyclohexyl-phenylendiamin-1,3 sowie 3,5-Dimethyl-3',5'-diisopropyl- und 3,3',5,5'-Tetraisopropyl-4,4'-diamino-diphenylmethan.

Die primären aromatischen Diamine können einzeln oder in Form von Mischungen, beispielsweise aus alkylsubstituierten 1,3-Phenylendiaminen, 3,3'-di- und/oder 3,3',5,5'-tetraalkylsubstituierten 4,4'-Diamino-diphenylmethanen eingesetzt werden. Außerdem können die primären aromatischen Diamine mit maximal 50 Gew.%, bezogen auf das Gesamtgewicht, primären alkylsubstituierten aromatischen Tri- bis Pentaminen, wie z.B. Polyphenyl-polymethylen-polyaminen gemischt sein, sofern die aromatischen Polyamine mindestens in einer o-Stellung zu den Aminogruppen mit einem Alkylrest substituiert sind.

Als Diaminkomponente (cii) werden vorzugsweise unsubstituierte primäre aromatische Diamine verwendet. Geeignet sind jedoch auch substituierte primäre aromatische Diamine, zweckmäßigerweise monoalkylsubstituierte aromatische Diamine, bei denen die Reaktivität der Aminogruppen durch den Substituenten nicht negativ beeinflußt wird. Im einzelnen seien beispielhaft genannt: 1,2-, 1,3- und 1,4-Phenylendiamin, Benzidin, 4,4'- und 2,4'-Diaminodiphenylmethan, 4,4'-Diamino-diphenylether, Naphthylen-1,5-diamin, Naphthylen-1,8-diamin, 3,4-, 2,4- und 2,6-Toluylen-diamin. Die aromatischen Diamine (cii) können ebenso wie die aromatischen Diamine (ci) einzeln oder in Form von Mischungen eingesetzt werden. Vorzugsweise Anwendung finden 2,4- und/oder 2,6-Toluylendiamin und insbesondere 1,3-Phenylen-diamin.

Als aromatische Diamine (c) haben sich besonders bewährt und werden daher vorzugsweise Mischungen verwendet aus
(ci) 80 bis 50 Gew.% 2,4-Dimethyl-6-tert.-butyl-phenylendiamin-1,3, 2,4-Diethyl-6-methyl- und/oder 2-Methyl-4,6-diethyl-phenylendiamin-1,3 und
(cii) 20 bis 50 Gew.% 1,3-Phenylendiamin, wobei die Gew.% bezogen sind auf das Gesamtgewicht der Mischung (c) aus den Komponenten (ci) und (cii).

Die Mischung (c) aus den aromatischen Diaminen (ci) und (cii) kommt beim erfindungsgemäßen Verfahren in Mengen von 5 bis 50 Gew.-Teilen, vorzugsweise 10 bis 40 Gew.-Teilen und insbesondere 15 bis 30 Gew.-Teilen, bezogen auf 100 Gew.-Teile der Komponente (b), zur Anwendung.

Gegebenenfalls kann es zweckmäßig sein, insbesondere bei der Herstellung von zellhaltigen Polyurethan-Polyharnstoff-Formkörpern, die Mischung aus primären aromatischen Diaminen (c) teilweise durch Kettenverlängerungsmittel und/oder Vernetzer (d) zu ersetzen. Die Kettenverlängerungsmittel

oder Vernetzer besitzen vorteilhafterweise Molekulargewichte kleiner als 500, vorzugsweise von 30 bis 400 und weisen vorzugsweise zwei aktive Wasserstoffatome auf. In Betracht kommen beispielsweise aliphatische und/ oder araliphatische Diole mit 2 bis 14, vorzugsweise 2 bis 6 Kohlenstoffatomen, wie Ethylenglykol, Propandiol-1,3, Decandiol-1,10, Diethylenglykol, Dipropylenglykol, Bis-(2-hydroxyethyl)-hydrochinon und vorzugsweise Ethylenglykol, Butandiol-1,4 und Hexandiol-1,6, Triole, wie Glycerin und Trimethylolpropan, niedermolekulare Polyoxyalkylen-polyole auf Basis Ethylen- und/oder 1,2-Propylenoxid und den vorgenannten Startermolekülen und sek. aromatische Diamine, von denen beispielhaft genannt seien: N,N'-dialkylsubstituierte aromatische Diamine, die gegebenenfalls am aromatischen Kern durch Alkylreste substituiert sein können, mit 1 bis 20, vorzugsweise 1 bis 4 Kohlenstoffatomen im N-Alkylrest, wie N,N'-Diethyl-, N,N'-Di-sek.-pentyl-, N,N'-Di-sek.-hexyl-, N,N'-Di-sek.-decyl-, N,N'-Dicyclohexyl-p- bzw. -m-phenylendiamin, N,N'-Dimethyl-, N,N'-Diethyl-, N,N'-Diisopropyl-, N,N'-Di-sek.-butyl-, N,N'-Dicyclohexyl-4,4'-diamino-diphenylmethan und N,N'-Di-sek.-butyl-benzidin.

Die Kettenverlängerungsmittel und/oder Vernetzer (d) können einzeln oder in Form von Mischungen eingesetzt werden. Sofern Mischungen aus aromatischen Diaminen (c) und Kettenverlängerungsmittel und/oder Vernetzern (d) Anwendung finden, enthalten diese vorteilhafterweise pro 100 Gew.Teile aromatische Diaminmischung (c) 1 bis 40, vorzugsweise 5 bis 20 Gew.Teile der Komponente (d).

Als Katalysatoren (e) werden insbesondere Verbindungen verwendet, die die Reaktion der Hydroxylgruppen enthaltenden Verbindungen der Komponenten (b) und gegebenenfalls (d) mit den Polyisocyanaten stark beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinn-dilaurat, Dibutylzinn-maleat und Dioctylzinn-diacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin. Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)--octan und Alkanolverbindungen, wie Triethanolamin, Triisopropanolamin, N-Methyl- und N-Ethyl-diethanolamin und Dimethylethanolamin.

Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxide, wie Natriumhydroxid und Alkalialkoholate, wie Natriummethylat und Kaliumisopropylat sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.%, insbesondere 0,05 bis 2 Gew.% Katalysator bzw. Katalysatorkombination, bezogen auf das Gewicht der Komponente (b).

Zu Treibmitteln (f), welche im erfindungsgemäßen Verfahren gegebenenfalls verwendet werden können, gehört Wasser, das mit Isocyanatgruppen unter Bildung von Kohlendioxid reagiert. Die Wassermengen, die zweckmäßigerweise verwendet werden können, betragen 0,5 bis 2 Gew.%, bezogen auf das Gewicht der Komponente (b).

Andere verwendbare Treibmittel sind niedrigsiedende Flüssigkeiten, die unter dem Einfluß der exothermen Polyadditionsreaktion verdampfen. Geeignet sind Flüssigkeiten, welche gegenüber dem organischen Polyisocyanat inert sind und Siedepunkte unter 100°C aufweisen. Beispiele derartiger, vorzugsweise verwendeter Flüssigkeiten sind halogenierte Kohlenwasserstoffe, wie Methylenchlorid, Trichlorfluormethan, Dichlordifluormethan, Dichlormonofluormethan, Dichlortetrafluorethan und 1,1,2-Trichlor-2,2,2-trifluorethan.

Auch Gemische dieser niedrigsiedenden Flüssigkeiten untereinander und/oder mit anderen substituierten oder unsubstituierten Kohlenwasserstoffen können verwendet werden.

Die zweckmäßigste Menge an niedrigsiedender Flüssigkeit zur Herstellung von zellhaltigen Polyurethan-Polyharnstoff-Formkörpern hängt ab von der Dichte, die man erreichen will sowie gegebenenfalls von der Mitverwendung von Wasser. Im allgemeinen liefern Mengen von 0,5 bis 15 Gew.Teilen, bezogen auf 100 Gew.Teile der Komponente (b) zufriedenstellende Ergebnisse.

Der Reaktionsmischung können gegebenenfalls auch noch Hilfsmittel und/oder Zusatzstoffe (g) einverleibt werden. Genannt seien beispielsweise oberflächenaktive Substanzen, Schaumstabilisatoren, Zellregler,

Füllstoffe, Farbstoffe, Pigmente, Flammschutzmittel, Hydrolyseschutzmittel, fungistatische und bakteriostatisch wirkende Substanzen.

Als oberflächenaktive Substanzen kommen Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten, oder von Fettsäuren sowie Salze von Fettsäuren mit Aminen, z.B. ölsaures Diethylamin oder stearinsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester und Türkischrotöl und Zellregler, wie Paraffine, Fettalkohole und Dimethylpolysiloxane. Die oberflächenaktiven Substanzen werden üblicherweise in Mengen von 0,01 bis 5 Gewichtsteilen, bezogen auf 100 Gewichtsteile der Komponente (b), angewandt.

Als Füllstoffe, insbesondere verstärkend wirkende Füllstoffe sind die an sich bekannten üblichen organischen und anorganischen Füllstoffe, Verstärkungsmittel, Beschwerungsmittel, Mittel zur Verbesserung des Abriebverhaltens in Anstrichfarben, Beschichtungsmitteln usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas, Asbestmehl u.a. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Asbest, Wollastonit und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate auf Styrol-Acrylnitrilbasis, die durch in situ Polymerisation von Acrylnitril-Styrol-Mischungen in Polyetherolen analog den Angaben der deutschen Patentschriften 11 11 394, 12 22 669, (US 3 304 273, 3 383 351, 3 523 093) 11 52 536 (GB 1 040 452) und 11 52 537 (GB 987 618) hergestellt und danach gegebenenfalls aminiert werden sowie Filler-polyoxyalkylen-polyole oder -polyamine, bei denen wäßrige Polymerdispersionen in Polyoxyalkylen-polyol- oder -polyamindispersionen übergeführt werden.

9032021

Die anorganischen und organischen Füllstoffe können einzeln oder als Gemische verwendet werden. Vorzugsweise Anwendung finden stabile Füllstoff-Polyoxyalkylen-polyol-Dispersionen, bei denen die Füllstoffe in Gegenwart von Polyoxyalkylen-polyolen in situ mit hohen örtlichen Energiedichten auf eine Teilchengröße kleiner als 7 µm zerkleinert und hierbei gleichzeitig dispergiert werden.

Die anorganischen und organischen Füllstoffe werden der Reaktionsmischung vorteilhafterweise in Mengen von 0,5 bis 50 Gew.%, vorzugsweise 1 bis 40 Gew.%, bezogen auf das Gewicht der Komponenten (a) bis (c), einverleibt.

Geeignete Flammschutzmittel sind beispielsweise Trikresylphosphat, Tris-2-chlorethylphosphat, Tris-chlorpropylphosphat und Tris-2,3-dibrompropylphosphat.

Außer den bereits genannten halogensubstituierten Phosphaten können auch anorganische Flammschutzmittel, wie Aluminiumoxidhydrat, Antimontrioxid, Arsenoxid, Ammoniumpolyphosphat und Calciumsulfat zum Flammfestmachen der Formkörper verwendet werden. Im allgemeinen hat es sich als zweckmäßig erwiesen, 5 bis 50 Gew.Teile, vorzugsweise 5 bis 25 Gew.Teile der genannten Flammschutzmittel für jeweils 100 Gew.Teile der Komponente (b) zu verwenden.

Nähere Angaben über die obengenannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, zu entnehmen.

Zur Herstellung der gegebenenfalls zelligen Polyurethan-Polyharnstoff-Formkörper werden die organischen Polyisocyanate (a), höhermolekularen Verbindungen mit mindestens zwei reaktiven Wasserstoffatomen (b), aromatischen Diamine (c) und gegebenenfalls Kettenverlängerungsmittel und/oder Vernetzer (d) in solchen Mengen zur Umsetzung gebracht, daß das Äquivalenz-Verhältnis von NCO-Gruppen der Polyisocyanate (a) zur Summe der reaktiven Wasserstoffatome der Komponenten (b), (c) und gegebenenfalls (d) 1:0,85 bis 1,25, vorzugsweise 1:0,95 bis 1,15 beträgt.

Die Herstellung der zellhaltigen und vorzugsweise kompakten Polyurethan-Polyharnstoff-Formkörper erfolgt nach dem Prepolymer-Verfahren oder vorzugsweise nach dem one shot-Verfahren mit Hilfe der bekannten Reaktionsspritzguß-Technik. Diese Verfahrensweise wird beispielsweise beschrieben

von Piechota und Röhr in "Integralschaumstoff", Carl-Hanser-Verlag, München, Wien 1975; D.J. Prepelka und J.L. Wharton in Journal of Cellular Plastics, März/ April 1975, Seiten 87 bis 98 und U. Knipp in Journal of Cellular Plastics, März/April 1973, Seiten 76 bis 84.

Bei Verwendung einer Mischkammer mit mehreren Zulaufdüsen können die Ausgangskomponenten einzeln zugeführt und in der Mischkammer intensiv vermischt werden. Als besonders vorteilhaft hat es sich erwiesen, nach dem Zweikomponenten-Verfahren zu arbeiten und die primären aromatischen Diamine (c) und gegebenenfalls Kettenverlängerungsmittel und/oder Vernetzer (d) in den höhermolekularen Verbindungen mit mindestens zwei reaktiven Wasserstoffatomen (b) zu lösen und gegebenenfalls mit Treibmitteln, Hilfs- und Zusatzstoffen in der Komponente (A) zu vereinigen und als Komponente (B) die organischen Polyisocyanate zu verwenden. Vorteilhaft ist hierbei beispielsweise, daß die Komponenten (A) und (B) getrennt gelagert und raumsparend transportiert werden können und bei der Verarbeitung nur noch in den entsprechenden Mengen gemischt werden müssen.

Die Menge des in das Formwerkzeug eingebrachten Reaktionsgemisches wird so bemessen, daß die erhaltenen kompakten Formkörper eine Dichte von 1,0 bis 1,4 $g/cm^3$, vorzugsweise von 1,0 bis 1,2 $g/cm^3$ und die zellhaltigen Formkörper eine Dichte von 0,8 bis 1,2 $g/cm^3$, vorzugsweise von 0,8 bis 1,0 $g/cm^3$ aufweisen. Die Ausgangskomponenten werden mit einer Temperatur von 15 bis 80°C, vorzugsweise von 20 bis 55°C in die Form eingebracht. Die Formwerkzeugtemperatur beträgt zweckmäßigerweise 20 bis 90°C, vorzugsweise 30 bis 75°C. Die Verdichtungsgrade zur Herstellung der mikrozellularen oder zellhaltigen Formkörper liegen zwischen 1,1 und 8, vorzugsweise zwischen 2 und 8.

Die nach dem erfindungsgemäßen Verfahren erhaltenen kompakten bzw. mikrozellularen Polyurethan-Polyharnstoff-Formkörper eignen sich insbesondere zur Verwendung in der Automobilindustrie, beispielsweise als Stoßstangenabdeckungen, Rammschutzleisten und Karosserieteile wie Regenrinnen, Kotflügel, Spoiler und Radkästenverbreiterungen sowie technische Gehäuseteile, Laufrollen und Schuhsohlen. Die zellhaltigen Schaumstoffe finden beispielsweise als Armlehnen, Kopfstützen, Sicherheitsabdeckungen im Automobilinnenraum sowie als Motorrad- und Fahrradsättel und Deckschichten in Verbundschaumstoffen Anwendung.

Die in den Beispielen genannten Teile beziehen sich auf das Gewicht.

Beispiel 1

A-Komponente: Mischung aus

81,0 Gew.-Teilen eines Polyether-polyols mit einer OH-Zahl von 26, das hergestellt wurde durch Addition von 1,2-Propylenoxid und anschließender Addition von Ethylenoxid an Trimethylolpropan,
12,6 Gew.-Teilen 1,3-Dimethyl-5-tert.-butyl-2,4-diaminobenzol,
5,2 Gew.-Teilen 1,3-Phenylen-diamin,
0,33 Gew.-Teilen 1,4-Diazabicyclo-(2,2,2)-octan und
0,1 Gew.-Teilen Dibutylzinndilaurat

B-Komponente:
48 Gew.-Teile einer Mischung aus polyoxypropylenglykol- und carbodiimid-modifiziertem 4,4'-Diphenylmethan-diisocyanat mit einem NCO-Gehalt von 26,5 Gew.%.

Die A- und B-Komponenten wurden auf 50°C erwärmt und nach dem Reaktionsspritzguß-Verfahren auf einer Hochdruckdosieranlage vom Typ (R)Puromat 30 der Elastogran-Maschinenbau in einer auf 30 bis 40°C temperierten Aluminiumform mit den Innenabmessungen 4 x 300 x 200 mm ohne Anwendung externer Trennmittel zu Formplatten verarbeitet. Die Formstandzeit betrug 30 Sekunden.

Da eine Haftung der Formkörper an das Formwerkzeug bei der Herstellung von 25 Formplatten in Folge nicht beobachtet wurde, wurde die Formteilherstellung abgebrochen.

Die erhaltenen Formplatten besaßen folgende mechanischen Eigenschaften:

| | | |
|---|---|---|
| Dichte nach DIN 53 420 | | 1,1 $g/cm^3$ |
| Shore D-Härte nach DIN 53 505 | | 61 |
| Zugfestigkeit nach DIN 53 504 | | 28,0 $N/mm^2$ |
| Dehnung nach DIN 53 504 | | 280 % |
| Weiterreißfestigkeit (Stab) nach DIN 53 507 | | 28,7 N/mm |
| Heat SAG | 1 h/120°C | 1,0 mm |

Beispiel 2

A-Komponente: Mischung aus

81,0 Gew.-Teilen des Polyether-polyols nach Beispiel 1,
12,0 Gew.-Teilen 1,3-Dimethyl-5-tertiär-butyl-2,4-diaminobenzol,
6,2 Gew.-Teilen 2,4-Toluylen-diamin,
0,33 Gew.-Teilen 1,4-Diazabicyclo-(2,2,2)-octan und
0,1 Gew.-Teilen Dibutylzinndilaurat

B-Komponente: analog Beispiel 1

Die Formplatten wurden analog den Angaben von Beispiel 1 hergestellt. Da bei der Herstellung von 25 Formplatten keine Haftung am Formwerkzeug beobachtet wurde, wurde die Formteilherstellung abgebrochen.

Die erhaltenen Formplatten besaßen folgende mechanischen Eigenschaften:

| | | |
|---|---|---|
| Dichte nach DIN 53 420 | | 1,07 g/cm$^3$ |
| Shore D-Härte nach DIN 53 505 | | 60 |
| Zugfestigkeit nach DIN 53 504 | | 29,6 N/mm$^2$ |
| Dehnung nach DIN 53 504 | | 275 % |
| Weiterreißfestigkeit (Stab) nach DIN 53 507 | | 30 N/mm |
| Heat SAG | 1 h/120°C | 1,2 mm |

Beispiel 3

A-Komponente: Mischung aus

80,3 Gew.-Teilen des Polyether-polyols nach Beispiel 1,
13,4 Gew.-Teilen einer Mischung aus 1-Methyl-3,5-diethyl-2,4- bzw. -2,6-diaminobenzol im Gewichtsverhältnis 80:20,
5,2 Gew.-Teilen 1,3-Phenylen-diamin,
0,33 Gew.-Teilen 1,4-Diazabicyclo-(2,2,2)-octan und
0,1 Gew.-Teilen Dibutylzinndilaurat

B-Komponente: 51 Gew.-Teile der Mischung nach Beispiel 1.

Die Formplatten wurden analog den Angaben von Beispiel 1 hergestellt. Da bei der Herstellung von 25 Formplatten in Folge keine Haftung am Formwerkzeug beobachtet wurde, wurde die Formteilherstellung abgebrochen.

9032021

Die erhaltenen Formplatten besaßen folgende mechanischen Eigenschaften:

| | | |
|---|---|---|
| Dichte nach DIN 53 420 | | 1,08 $g/cm^3$ |
| Shore D-Härte nach DIN 53 505 | | 59 |
| Zugfestigkeit nach DIN 53 504 | | 28,0 $N/mm^2$ |
| Dehnung nach DIN 53 504 | | 260 % |
| Weiterreißfestigkeit (Stab) nach DIN 53 507 | | 27 N/mm |
| Heat SAG | 1 h/120°C | 1,4 mm |

Patentansprüche

1. Verfahren zur Herstellung von zellhaltigen oder kompakten Polyurethan-Polyharnstoff-Formkörpern durch Umsetzung von
a) organischen Polyisocyanaten,
b) höhermolekularen Verbindungen mit mindestens zwei reaktiven Wasserstoffatomen,
c) aromatischen Diaminen und gegebenenfalls
d) weiteren Kettenverlängerungsmitteln und/oder Vernetzern

in Gegenwart von
e) Katalysatoren und gegebenenfalls
f) Treibmitteln,
g) Hilfsmitteln und/oder Zusatzstoffen

als one shot-Systeme nach der Reaktionsspritzgußtechnik, in geschlossenen Formwerkzeugen, dadurch gekennzeichnet, daß man als aromatische Diamine (c) Mischungen verwendet aus

ci) 80 bis 50 Gew.% mindestens eines primären aromatischen Diamins, dessen Aminogruppen gegenüber Polyisocyanaten durch mindestens einen orthoständigen Alkylsubstituenten zu jeder Aminogruppe sterisch behindert sind und

cii) 20 bis 50 Gew.% mindestens eines unsubstituierten oder substituierten primären aromatischen Diamins, dessen Aminogruppen gegenüber Polyisocyanaten keine durch elektronenanziehende Substituenten und/oder sterische Hinderung verursachte verminderte Reaktivität zeigen,

wobei die Gew.% bezogen sind auf das Gesamtgewicht der Mischung (ci) und (cii).

2. Verfahren nach Anspruch 1, dadurch gekennzeichnet, daß die zellhaltigen oder kompakten Polyurethan-Polyharnstoff-Formkörper in Abwesenheit von äußeren Formtrennmitteln hergestellt werden.

3. Verfahren nach Anspruch 1, dadurch gekennzeichnet, daß als primäre aromatische Diamine (ci) verwendet werden: alkylsubstituierte meta-Phenylendiamine der Formeln,

9032021

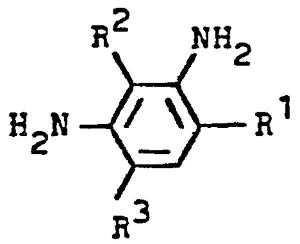 und/oder 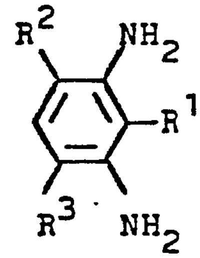

in denen bedeuten:

$R^1$ ein Wasserstoffatom oder einen linearen oder verzweigten Alkylrest mit 1 bis 12 Kohlenstoffatomen und
$R^2$ und $R^3$ gleiche oder verschiedene, lineare oder verzweigte Alkylreste mit 1 bis 4 Kohlenstoffatomen und/oder
alkylsubstituierte Diamino-diphenylmethane der Formel

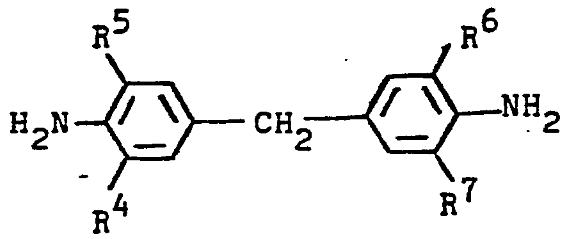

in der $R^4$, $R^5$, $R^6$ und $R^7$ gleich oder verschieden sind und einen Methyl-, Ethyl-, Propyl-, Isopropyl-, sek.-Butyl- und tert.-Butylrest bedeuten, wobei jedoch mindestens einer der Reste eine Isopropyl- oder sek.-Butylrest sein muß.

4. Verfahren nach Anspruch 1, <u>dadurch gekennzeichnet</u>, daß als primäre aromatische Diamine (ci) verwendet werden: 2,4-Diethyl-, 2,4-Dimethyl-phenylendiamin-1,3, 2,4-Diethyl-6-methyl-, 2-Methyl-4,6-diethyl-phenylendiamin-1,3, 2,4,6-Triethyl-phenylendiamin-1,3, 2,4-Dimethyl-6-tert.-butyl-, 2,4-Dimethyl-6-isooctyl-, 2,4-Dimethyl-6--cyclohexyl-phenylendiamin-1,3, 3,5-Dimethyl-3',5'-diisopropyl- und 3,3',5,5'-Tetraisopropyl-4,4'-diamino-diphenylmethan.

5. Verfahren nach Anspruch 1, <u>dadurch gekennzeichnet</u>, daß als unsubstituierte oder substituierte aromatische Diamine (cii) verwendet werden: 1,3-Phenylendiamin, 2,4- und/oder 2,6-Toluylen-diamin.

6. Verfahren nach Anspruch 1, dadurch gekennzeichnet, daß als aromatische Diamine (c) Mischungen verwendet werden aus

ci) 80 bis 50 Gew.%, 2,4-Dimethyl-6-tert.-butyl-phenylendiamin-1,3, 2,4-Diethyl-6-methyl- und/oder 2-Methyl-4,6-diethyl-phenylendiamin-1,3 und

cii) 20 bis 50 Gew.% 1,3-Phenylen-diamin, wobei die Gew.% bezogen sind auf das Gesamtgewicht der Mischung (c).

7. Verfahren nach Anspruch 1, dadurch gekennzeichnet, daß die höhermolekularen Verbindungen (b) eine Funktionalität von 2 bis 8 und ein Molekulargewicht von 1000 bis 8000 besitzen.

8. Verfahren nach Anspruch 1, dadurch gekennzeichnet, daß man als höhermolekulare Verbindungen (b) Polyether-polyamine und/oder Polyole ausgewählt aus der Gruppe der Polyether-polyole, Polyester-polyole, Polythioether-polyole, Polyesteramide, hydroxylgruppenhaltigen Polyacetale und/oder hydroxylgruppenhaltigen aliphatischen Polycarbonate verwendet.

9. Verfahren nach Anspruch 1, dadurch gekennzeichnet, daß man pro 100 Gew.-Teile der Komponente (b) 5 bis 50 Gew.-Teile der Komponenten (c) und gegebenenfalls (d) verwendet und das Äquivalenzverhältnis von NCO-Gruppen der Polyisocyanate (a) zu reaktiven Wasserstoffatomen der Komponenten (b), (c) und gegebenenfalls (d) 1:0,85 bis 1,25 beträgt.

10. Verfahren nach Anspruch 1, dadurch gekennzeichnet, daß die Formkörper im wesentlichen kompakt sind oder einen zelligen Kern und eine kompakte Außenhaut besitzen und eine Gesamtdichte von 0,8 bis 1,4 $g/cm^3$ aufweisen.

Europäisches Patentamt

## EUROPÄISCHER RECHERCHENBERICHT

0157120 Nummer der Anmeldung

EP 85 10 1244

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| X | EP-A-0 019 232 (BAYER)<br>* Ansprüche 1 und 9; Seite 3, Zeilen 1-12; Seite 13, Zeilen 1-15; Seite 24, Zeilen 1-2; Seite 29, Zeilen 1-3 *<br>--- | 1-3,5, 7,8 | C 08 G 18/65<br>C 08 G 18/32 |
| X | EP-A-0 017 928 (BAYER)<br>* Ansprüche 1,3 und 4; Seite 15, Zeile 1 - Seite 16, Zeile 13; Beispiele 11 und 12 *<br>--- | 1-5,7-9 | |
| D,A | EP-A-0 069 286 (BASF)<br>* Ansprüche 1,8 und 9; Seite 12, Zeile 26; Seite 16, Zeilen 31,32 *<br>--- | 1,3,4 | RECHERCHIERTE SACHGEBIETE (Int. Cl.4) |
| D,A | EP-A-0 026 915 (BASF)<br>* Ansprüche 1 und 4; Seite 13, Zeilen 1-7 *<br>----- | 1,3,4 | C 08 G |

Der vorliegende Recherchenbericht wurde für alle Patentansprüche erstellt.

| Recherchenort | Abschlußdatum der Recherche | Prüfer |
|---|---|---|
| DEN HAAG | 21-06-1985 | VAN PUYMBROECK M.A. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82